# EUROPEAN PATENT SPECIFICATION

(11) **EP 3 396 904 B1**
(45) Date of publication and mention of the grant of the patent: **08.07.2020**
(21) Application number: 17196443.0
(22) Date of filing: 13.10.2017
(51) Int. Cl.: H04L 12/58, H04L 29/08, H04L 29/06, G06Q 50/00, G06Q 10/10

(54) **SYSTEM AND METHOD OF LIMITING USER ACCESS TO SUSPICIOUS OBJECTS OF A SOCIAL NETWORK**
SYSTEM UND VERFAHREN ZUR BEGRENZUNG DES BENUTZERZUGRIFFS AUF VERDÄCHTIGE OBJEKTE EINES SOZIALEN NETZWERKS
SYSTÈME ET PROCÉDÉ DE LIMITATION DE L'ACCÈS UTILISATEUR AUX OBJETS SUSPECTS D'UN RÉSEAU SOCIAL

(30) Priority: 28.04.2017 RU 2017115052; 04.08.2017 US 201715668924
(43) Date of publication of application: 31.10.2018
(73) Proprietor: AO Kaspersky Lab, Moscow 125212 (RU)
(72) Inventor: LARKINA, Anna D., 125212 MOSCOW (RU); TUSHKANOV, Vladislav N., 125212 MOSCOW (RU)
(74) Representative: Chimini, Francesco

(56) References cited:
- EP-A1- 2 725 532
- US-A1- 2013 024 516
- US-A1- 2015 067 777

## Description

### FIELD OF TECHNOLOGY

The present disclosure relates generally to social network services and, in particular, system and methods of limiting user access to suspicious objects of a social network service.

### BACKGROUND

At present it is hard to imagine any sphere of human activity in which computer technologies are not used. In the modern world, users are spending ever more of their free time on the Internet, especially on social networks (also referred to as social network services, social media, or social networking sites). For just this reason, social networks have become a lucrative place for hackers. Fraudsters create fake user or group profiles on social networks, and also unlawfully gain access to ("hack") the profiles of ordinary users. With the use of such fake profiles, hackers engage in the spread of malicious programs, forbidden and illegal content, as well as social engineering, extortion, phishing and other fraudulent or even criminally punishable actions. Many users and in particular children fall victim to such actions.

In view of the growing threat which has arisen in connection with the use of the Internet by children, parental control software is becoming increasingly popular. Parental control software limits access of a user (who is usually a child) to computer resources and the Internet in accordance with rules imposed by another user (usually the parent). However, with the use of such systems, it is often impossible to limit access to specific forbidden and suspicious objects of a social network (the profiles of other users, the profiles of groups, content elements such as photographs, audio and video recordings, and so on) without limiting access to the social network itself, i.e., the entire social network. A technical problem arises involving the accessibility of suspicious objects of social networks. US 2015/067777 A1 discloses techniques for authenticating nodes based on clustering.

However, the existed technologies do not solve the technical problem of a user's access to specific suspicious objects of a social network.

### SUMMARY

Thus, a system and method is disclosed herein for limiting user access to suspicious objects of a social network service. The technical result of the present disclosure includes enabling a limiting of user access to suspicious objects of a social network and the improved security resulting therefrom due to the decrease in exposure to suspicious objects and malicious actors in a social network.

The present invention is defined in the appended independent claims to which reference should be made. Advantageous features are set out in the appended dependent claims.

### BRIEF DESCRIPTION OF THE DRAWINGS

The accompanying drawings, which are incorporated into and constitute a part of this specification, illustrate one or more example aspects of the present disclosure and, together with the detailed description, serve to explain their principles and implementations.
**Figure 1** is a block diagram of illustrating a system for limiting user access to suspicious objects of a social network service.
**Figure 2** shows an example of a social graph according.
**Figure 3** is a flowchart illustrating a method for limiting user access to suspicious objects of a social network service.
**Figure 4** is a flowchart illustrating another variant of the method for limiting user access to suspicious objects of a social network service.
**Figure 5** is a flowchart illustrating a method of filling the database of forbidden objects.
**Figure 6** illustrates an example of implementing the method of filling the database of forbidden objects with the example of a social graph.
**Figure 7** illustrates a block diagram of a general-purpose computer system on which the disclosed system and method can be implemented.

### DETAILED DESCRIPTION

Example aspects are described herein in the context of a system, method and computer program product for limiting user access to suspicious objects of a social network service. Those of ordinary skill in the art will realize that the following description is illustrative only and is not intended to be in any way limiting. Other aspects will readily suggest themselves to those skilled in the art having the benefit of this disclosure. Reference will now be made in detail to implementations of the example aspects as illustrated in the accompanying drawings. The same reference indicators will be used to the extent possible throughout the drawings and the following description to refer to the same or like items.

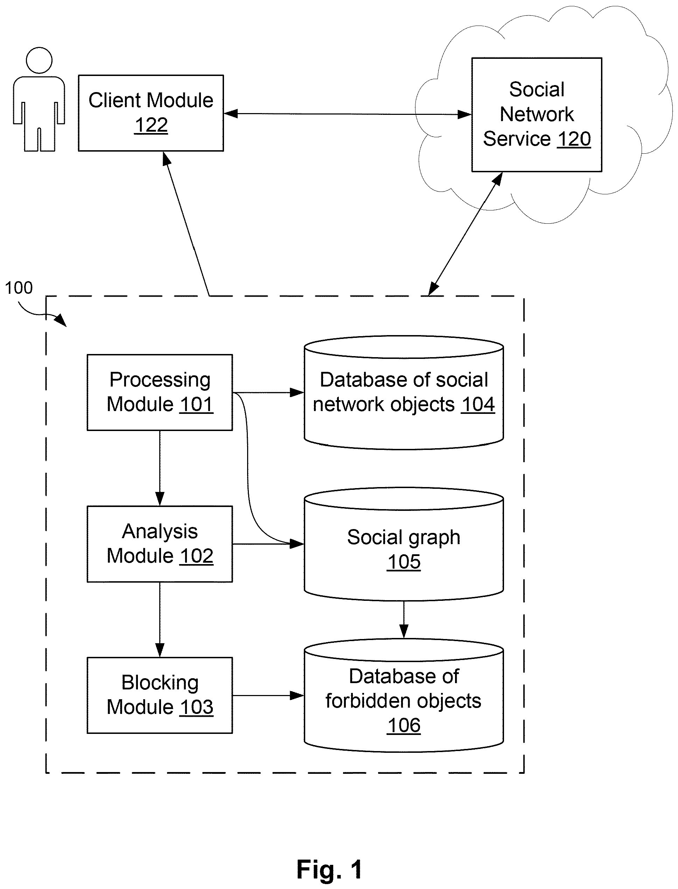

**Figure 1** is a block diagram illustrating a system **100** for limiting user access to suspicious objects of a social network service. The system **100** includes a processing module **101** configured to produce a social graph **105**, constructed for a given user profile (hereinafter, a profile) in a social network service **120**. The given profile can be specified (selected) by the administrator of the present system. For example, if the present system is a parental control system, said user can be specified (selected) by the administrator of the parental control system (such as the parent of the child, or a specified user). In some examples, the processing module **101** may obtain the social graph **105** (e.g., via export, or an API call) from the social network service **120**.

A social network service **120** (interchangeably referred to as a social network) is an online service in which users can build social relationships with other users based on interests, activities, backgrounds, and real-life connections. Social network services typically allow a user to construct a public (or semi-public) profile within the service, indicate a list of other users with whom to form a connection, and traverse the list of connections and those made by other users within the service.

A user may access the social network service **120** through a variety of user interfaces, including a client module **122.** The client module **122** can be a web browser application configured to access a web-based application of the social network service **120**. In other examples, the client module **122** may also include mobile application, a desktop application, e-mail, or messaging platforms. The social network service **120** may also be programmatically accessed by computing systems (e.g., system **100**) via an application programming interface (API).

In one example, the social graph **105** may be a graph whose vertices are specified objects of the social network, while the presence of an edge between the two vertices indicates the presence of a social link between two objects of the social network situated at the aforementioned two vertices. The objects of the social network can be, in particular, user profiles. The social graph **105** contains the specified profile and at least one other profile of the social network with which the specified profile is linked. In other words, the social graph **105** contains a specified profile and other profiles which are linked directly to the specified profile. All objects of the social graph **105** are objects of the social network. However, in the general case, not all objects of the social network are contained in the constructed social graph **105**. In some examples, the profiles can include the user profiles and the profiles of groups of users (or group profiles). Objects of the social network include user profiles and content elements. Content elements may be, in particular, the following: photographs, video, audio (music), and text information. In some examples, content elements may be associated with one or more user profiles. Content elements may be provided by one or more users, i.e., uploaded to the social network by a user, also known as user-generated content.

The system **100** further includes a database **104** configured to store the data of objects of the social network. The data of objects of the social network may include, in particular, the attributes of the objects. The user profiles may include, in particular, one or more of the following attributes: the identifier, the type of object, a link to a user profile in the social network, the name, date of birth, and so forth. The profiles of groups may include one or more of the following attributes: the identifier, the type of object, a link to the group profile in the social network, themes, date of creation, description of the group, and so forth.

A social link (hereinafter, link) between two objects of the social network refers to a link established by the social network between objects of the social network. For example, user A, who has the user profile A, has added user B, who has the user profile B, as a friend (using the control elements of the social network), subscribed to updates of user B, or added user B to subscribers. A corresponding social link is therefore established between the profiles of users A and B. Depending on the established social link, users A and B will have access to corresponding information (e.g., profiles, content elements) and capabilities of the social network. For example, if a "friendship" link is established between profiles A and B, user A is then permitted to view the profile information of user B and may be able to write messages to user B. A social link can be asymmetrical (i.e., one-way) or symmetrical, meaning the social link from one user to another user bestows an equivalent relationship the other way around. For example, user B will have the same capabilities to view and write messages to user A. Other types of social links may include a "follower" link indicating user A follows user B, a "member of' link indicating user A is a member of a profile of a group of users in the social network, a "blocked" link indicating that a user A wishes to prevent contact and connections from another user B in the service, and other links which may have different nomenclature depending on the particular social network service. It is noted that in the present disclosure the term "user" may sometimes be used to refer to the user profile associated with a user.

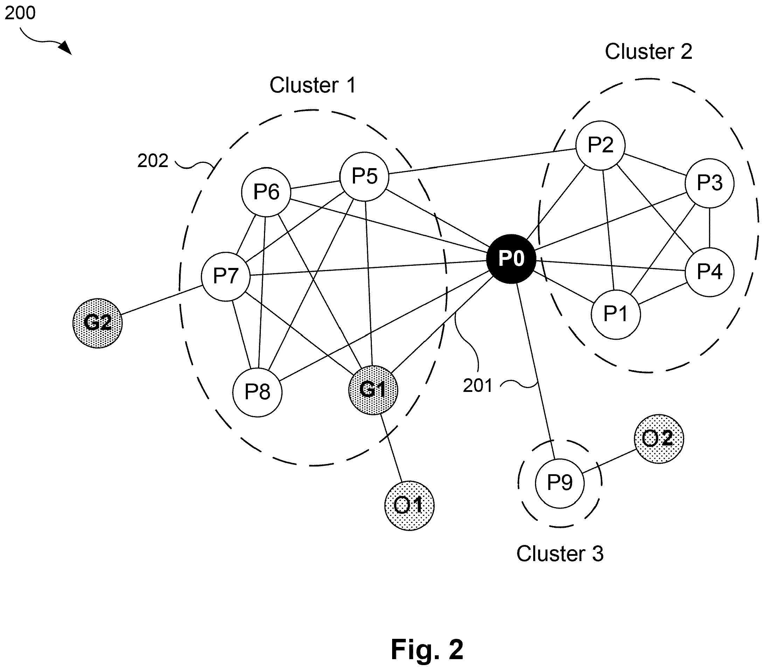

The processing module **101** also serves to identify in the social graph **105** clusters of users in accordance with a particular algorithm (method) of clustering (an example of the identifying of clusters will be given below, in **Fig. 2**). In one example, the identifying of clusters of users is done in such a way that the number of social links between the profiles of the users of one cluster is not less than (i.e., greater than or equal to) the number of social links between the profiles of the users from different identified clusters. For example, if a first user profile is assigned to a first cluster, the number of social links of the first user profile with each profile from the first cluster will be not less than the number of social links of the first user profile with any other user profile not contained in the first cluster.

The system **100** includes an analysis module **102** communicatively connected to the processing module **101** and is configured to determine for one or more identified clusters in the social network at least one object which is linked to not less than a given number of profiles contained in the identified cluster. In one example, the analysis module **102** serves to determine, for each identified cluster in the social network, at least one object which is linked to not less than a given number of profiles contained in said identified cluster. The given number of profiles may be determined in advance by the analysis module **102** (for example, two, three, four, and so on). In another example, the given number of profiles may depend on the number of all profiles of the cluster and be equal, for example, to the number of all profiles of the cluster, half of the number of profiles of the cluster, and so forth.

In one example, the profiles are profiles of groups of users. Thus, the analysis module **102** in this example may be configured to determine, for each identified cluster, the profiles of groups of users in which not less than a given number of users of this cluster are present. It is considered that a user is in a group if an edge exists between the vertex of the social graph "user profile" and the vertex "user group profile", characterizing the presence of a social link.

The analysis module **102** may determine, from the at least one object previously determined, that there is accordingly at least one object as being forbidden, by finding that object in a database of forbidden objects **106**.

The system 100 includes a database **106** of forbidden objects that stores a list of objects of the social network which are forbidden. In some examples, the database of forbidden objects **106** may contain the identifiers of forbidden objects. In another example, the database **106** may contain other attributes of objects whose presence indicates that the objects of the social network are forbidden. In one example, the database of forbidden objects **106** may also contain categories of forbidden objects for each such object. In some examples, initial contents of the database **106** may be obtained from a third-party provider, and added to by the system according to examples described later. The database of forbidden objects **106** may also be formed in advance by an analyst, for example making use of lists of forbidden objects, the expertise of analysts, and so forth. In some examples, the database of forbidden objects **106** may contain objects of one or more different types, for example only group profiles. In one example, the database **106** may contain objects from one or more prohibited categories including malicious content, fraudulent groups, nudity, hate speech, violence and graphic content, other similar objectionable content categories.

Using the analysis module **102,** at least one object in the social network is determined to be suspicious if that object is linked to at least one object previously determined to be forbidden.

The system **100** includes a blocking module **103** which is communicatively connected to the analysis module **102.** The blocking module **103** is configured to carry out operations for limiting the access of the specified profile to suspicious objects of the social network. In one example, the blocking module **103** may limit access of the specified profile to suspicious objects by forbidding access to the mentioned suspicious objects of the social network. In some examples, the blocking module **103** may direct the client module **122** to refrain from displaying, downloading, or accessing content elements from the suspicious objects, or otherwise prevent the client module **122** from doing so. In other examples, the blocking module **103** may direct the client module **122** to render a placeholder in lieu of the suspicious objects, and/or redirect the user to an information page or other default content. In some examples, the limiting of access by the specified profile to suspicious objects may also involve in particular one of the following actions with the suspicious object, depending on the object: sending a request to the administrator of the social network to remove the content element or close the profile; sending a request to the administrator of the social network to remove some of the content elements contained in the profile when the object is a profile; providing access with a request to verify the user's identity.

**Figure 2** shows an example of a social graph **200**. The social graph **200** is constructed for a selected user profile P0 and contains a plurality of other user profiles, group profiles, and content elements with which the specified user profile P0 is linked by one or more social links **201**. In this example, the user profiles are represented by vertices of the graph P0-P9, group profiles by vertices G1, G2, and content elements by vertices O1, O2 (such as photographs, video, audio (music), and so forth). In this example, P0 is the specified user profile, i.e., selected by an administrator. As a result of clustering, the processing module **101** has identified three clusters Cluster 1, Cluster 2, and Cluster 3 (depicted as dashed ovals 202). In one example, the profile P0 is contained in each of the clusters. In other examples, the profile P0 is not associated with any cluster. For ease of presentation, it can be further considered that the profile P0 does not belong to any cluster. The processing module **101** assigns the user profiles P1-P4 to the first cluster; the profiles P5-P8 and the group profile G1 to the second cluster; and only the profile P9 to the third cluster.

Such a method of identifying in a social graph **200** clusters of users illustrates a particular example of the present disclosure: each cluster of users contains user profiles between which the number of social links is not less than the number of social links between the user profiles from the different identified clusters. For example, in cluster 1, the vertices P5-P8 and G1 are linked together, and only two vertices - P8 and G1 - are not linked. Vertex P5 has one link with vertex P2 of cluster 2, but in cluster 1 vertex P5 has five links. Therefore, the processing module **101** assigns P5 to cluster 1 because otherwise the number of social links (one) from P5 to profiles in cluster 2 would be less than the number of social links of P5 with any other profiles not in cluster 2 (five). Similarly, vertex P2 has five links in cluster 2 and one link with vertex P5 in cluster 1. Vertex P9 is the only one in cluster 3. The group profile G2 and content elements O1, O2 do not belong to any cluster, since they are not linked to the specified profile P0.

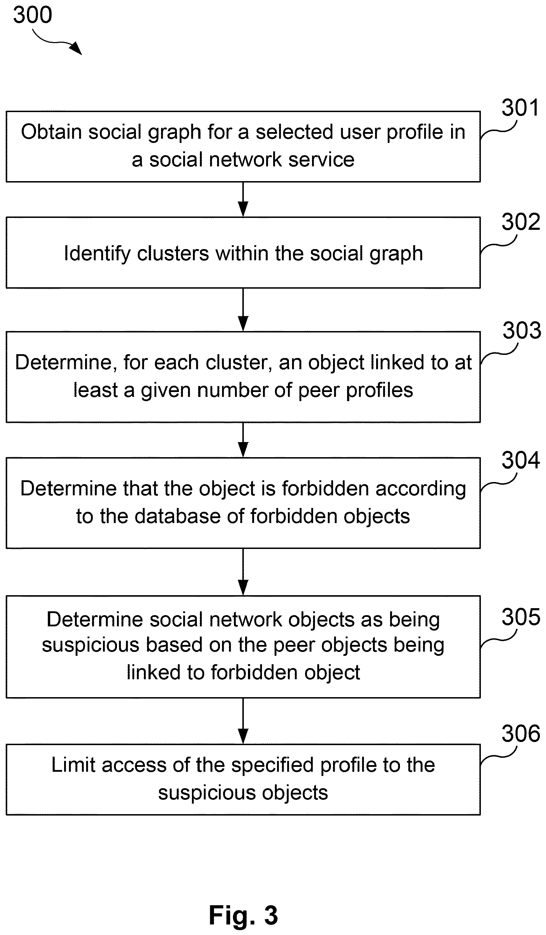

**Figure 3** is a flowchart illustrating a method **300** for limiting user access to suspicious objects of a social network service. In step **301** the processing module **101** obtains the social graph **105** constructed for the specified user profile in a social network (hereafter, the profile) and containing the specified profile and at least one other profile of the social network to which the specified profile is linked. Next, in step **302,** the processing module **101** identifies in the social graph **105** clusters of profiles according to the given method of clustering. In one example, the processing module **101** may identify the clusters with the use of one or more suitable clustering algorithms, including the Louvain Method for community detection; clique percolation method; and derivation of stochastic block models.

In one example, the method of clustering is determined by the processing module **101**. In one example, the choice of the clustering method depends on the number of vertices (objects) or edges (links) in the social graph.

In step **303** the analysis module **102** determines for each identified cluster in the social network at least one object which is linked to no less than (e.g., at least) a given number (such as one, two, three, four, and so forth) of profiles contained in the mentioned identified cluster. In a particular example, such profiles are profiles of groups of users. In some examples, the analysis module **102** determines, for each identified cluster, at least one object which is linked to at least a threshold amount of peer objects contained in the respective cluster.

Using the analysis module **102** in step **304**, from the at least one object so determined (in step 303) there is determined accordingly at least one object as being forbidden by finding that object in the database of forbidden objects **106**. In one example, profiles are additionally determined to be suspicious when they belong to one cluster and the majority of the profiles of that cluster are linked to forbidden objects.

Using the analysis module **102,** in step **305** at least one object in the social network is determined as being suspicious if that object is linked to at least one object determined to be forbidden (in step **304**). In some examples, the analysis module **102** determines that the social network objects are characterized as suspicious based on social links between the peer objects and the object identified as forbidden (in step **304**).

In one example, for at least one identified cluster all profiles of that cluster are additionally determined to be suspicious if not less than a given number (e.g., an intra-cluster threshold) of the profiles of that cluster have been determined to be suspicious (in step **305**). For example, if the cluster has a total of 20 profiles and 7 of them have been determined as being suspicious in step **305**, then the remaining 13 profiles will likewise be determined to be suspicious. In another example, if half of the profiles (in the mentioned example, 10) have been determined to be suspicious in step **305**, then the remaining profiles of the cluster will also be determined to be suspicious.

As a result, in step **306** the blocking module **103** limits the access of the specified profile to the suspicious objects of the social network.
In some examples, in step **306** access to the specified user profile is limited to suspicious objects of the social network which have been found in the database of forbidden objects **106**.

Thus, by limiting the access to the specified user profile to suspicious objects of the social network in step **306** the technical problem of accessibility of suspicious objects of social networks is solved and the said technical result is achieved, namely, the assuring of a limiting of access of a user to suspicious objects of a social network.

Let us consider the example of the social graph **200** depicted in **Figure 2**. In this example, in step **302**, the processing module **101** identifies three clusters. In step **303,** the analysis module **102** selects for consideration a group profile G1, since this group is linked to 4 profiles of cluster 1 (P5-P8). Group G2 will not be selected for consideration in step **303**, since it is only linked to profile P7. In step **304** the analysis module **102** performs a check to see if group G1 is contained in the database of forbidden objects **106.** If so, then in step **305** the analysis module **102** determines that the user profiles P5-P8 are characterized as being suspicious, since they are linked to the forbidden profile of group G1. The content element O1, linked to the forbidden group G1, will also be recognized as suspicious. As a result, in step **306**, the blocking module **103** limits access of the specified profile P0 to the content element O1, and in the particular example also to the user profiles P5-P8 and to group G1.

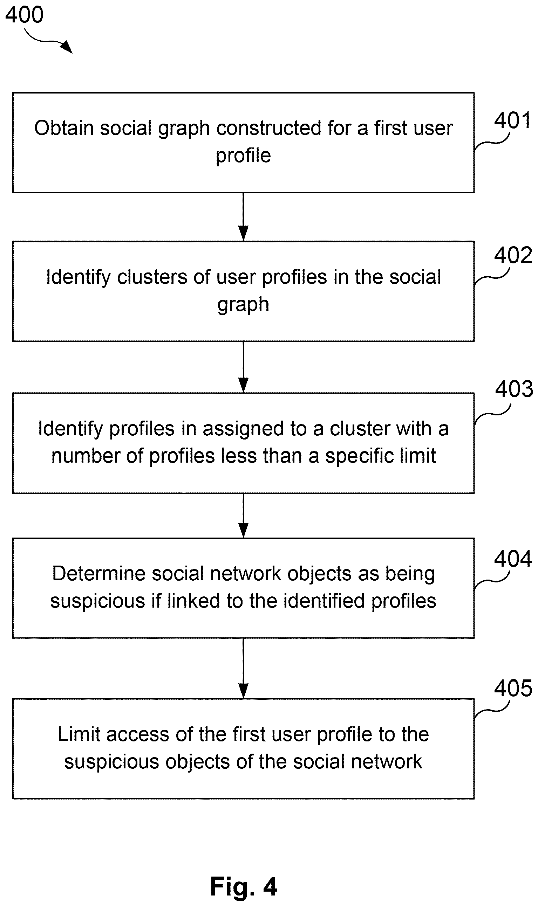

**Figure 4** is a flowchart illustrating another variant of the method for limiting user access to suspicious objects of a social network service. Some of the steps of the method concur with the steps of the method presented in **Figure 3**. Thus, in step **401** the processing module **101** obtains the social graph **105** constructed for the specified user profile and containing the specified profile and at least one other profile of the social network to which the specified profile is linked. Then, in step **402,** the processing module **101** identifies in the obtained social graph **105** clusters of profiles according to a given clustering algorithm (method).

In step **403**, the analysis module **102** is used to identify profiles of the social graph **105** assigned to the cluster with a number of profiles less than a specified limit number (for example, less than two profiles or only one profile). In some examples, the analysis module **102** may select objects in the social graph **105** that are assigned to a particular cluster based on a determination that the particular cluster has less than a threshold amount of objects contained therein (i.e., a container threshold). In a particular example, in step **403**, profiles are identified which are not assigned to any one of the clusters.

Then, in step **404,** the analysis module **102** is used to determine objects of the social network as being suspicious if those objects of the social network have a social link with the identified user profiles of the social graph **105.** As a result, in step **405,** the blocking module **103** is used to limit the access by the specified user profile to the suspicious objects of the social network. In a particular example, access of the specified user profile is limited to suspicious objects of the social network which have been found in the database of forbidden objects **106**.

Thus, the method **400** according to **Figure 4** differs from the method **300** according to **Figure 3** in that, in step **303,** the analysis module **102** is additionally used to find profiles assigned to a cluster with a number of profiles less than a specified limit number, and in step **305** the analysis module **102** is additionally used to determine objects as being suspicious if those objects have a social link to the identified profiles (identified in step **303**).

Consider again the example of the social graph **200** depicted in **Figure 2**. In this example, in step **402**, the processing module **101** identifies 3 clusters, Cluster 1, Cluster 2, and Cluster 3. In step **403,** the analysis module **102** identifies a user profile P9, assigned to cluster 3, with a number of user profiles less than a specified limit number (for example, with a number of profiles less than two). Cluster 3 contains one profile - P9. In step **404,** the analysis module **102** determines the content element O2 as being suspicious, since it is linked to user profile P9 of cluster 3. As a result, in step **405**, the blocking module **103** limits access of the specified user profile P0 to the suspicious content element O2. In a particular example, access of profile P0 to user profile P9 will also be limited.

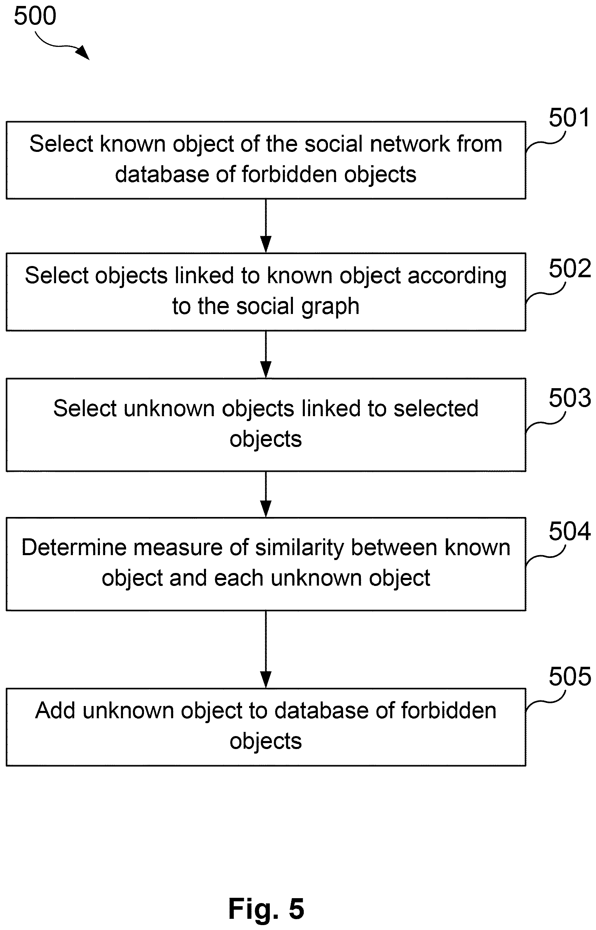

**Figure 5** is a flowchart of the method **500** of filling the database of forbidden objects. The method **500** can be carried out, for example, with the use of the blocking module **103**. Thus, in the first step **501,** the blocking module **103** selects a known object of the social network (such as a user group profile) from the database of forbidden objects **106**. Next, in step **502,** the blocking module **103** selects objects which are linked to the selected known object using the social graph **150**. After this, in step **503,** the blocking module **103** selects unknown objects which are absent from the database of forbidden objects **106** and which are linked to the selected objects. In step **504**, the blocking module **103** may determine a measure (e.g., metric) of similarity of the known object with each unknown object from the common profiles having a link both to the known object and to the mentioned unknown object. As a result, in step **505**, the blocking module **103** adds the unknown object to the database of forbidden objects **106** as being a forbidden object if the measure of similarity of the known object and said unknown object exceeds a given threshold of similarity (for example, more than 50% similar). This threshold limit can be specified in advance by an analyst or, for example, by the blocking module **103**. In one example, the measure of similarity of groups is the Jaccard index. In one example, the blocking module **103** assigns the unknown object so added the category of the known object.

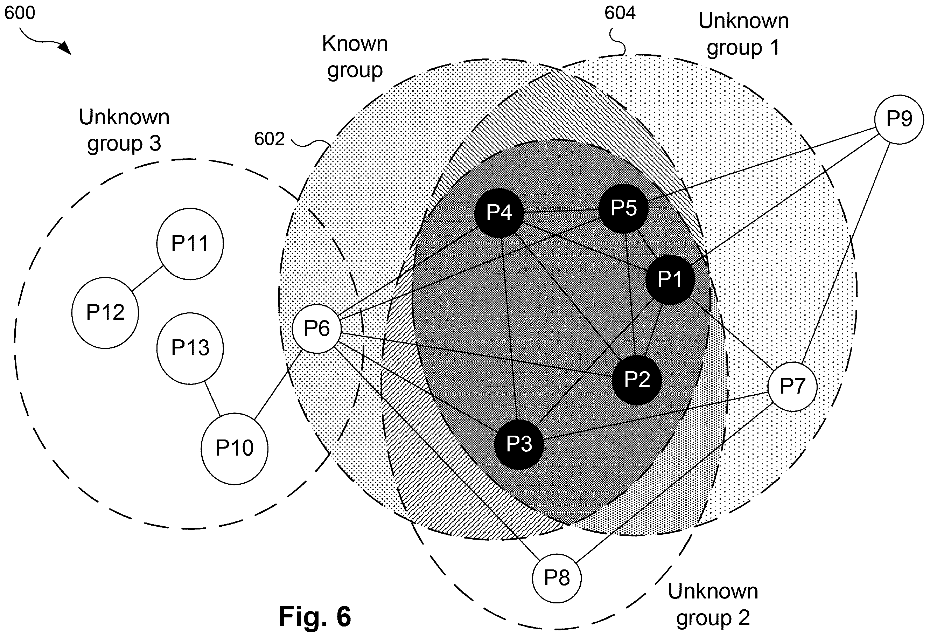

**Figure 6** illustrates an example of the implementing of the method of filling the database of forbidden groups with the example of a social graph **600** using the blocking module **103**. The figure shows the example of a social graph **600** including user profiles P1-P13. For clarity, the group profiles (e.g., G1, G2, from Fig. 2) are indicated by hatched sets **602** encompassing the graph vertices which are linked to the corresponding group profiles. For example, the profile of a known group (set **602**) is linked to profiles P1-P6. The profile of unknown group 1 (set **604**) is linked to the user profiles P1-P5 and P7. And the profile of unknown group 2 is linked to profiles P1-P5 and P8. Unknown group 3 includes the users P6 and P10-P13. User P9 does not belong to any of the aforementioned groups.

Thus, returning to the method of **Figure 5**, in step **501,** the blocking module **103** there selects the profile of a known group of users, then in step **502**, the blocking module **103** selects the profiles of users P1-P6. In step **503**, the blocking module **103** selects the profiles of the unknown groups 1-3. In step **504**, the blocking module **103** calculates a similarity measure for the known group and each unknown group 1-3. As can be seen, the known group and the unknown groups 1 and 2 have 5 users in common, while each of these groups has a total of 6 users. Thus, in step **505**, the blocking module **103** adds the profiles of the unknown groups 1 and 2 to the database **106** of forbidden groups, since they have a high measure of similarity to the known group. The unknown group 3 has a low measure of similarity with the known group, having no more than 1 user in common. In one example, the added profiles of the unknown groups 1 and 2 will be assigned the category of the known group (for example, a fraudulent group).

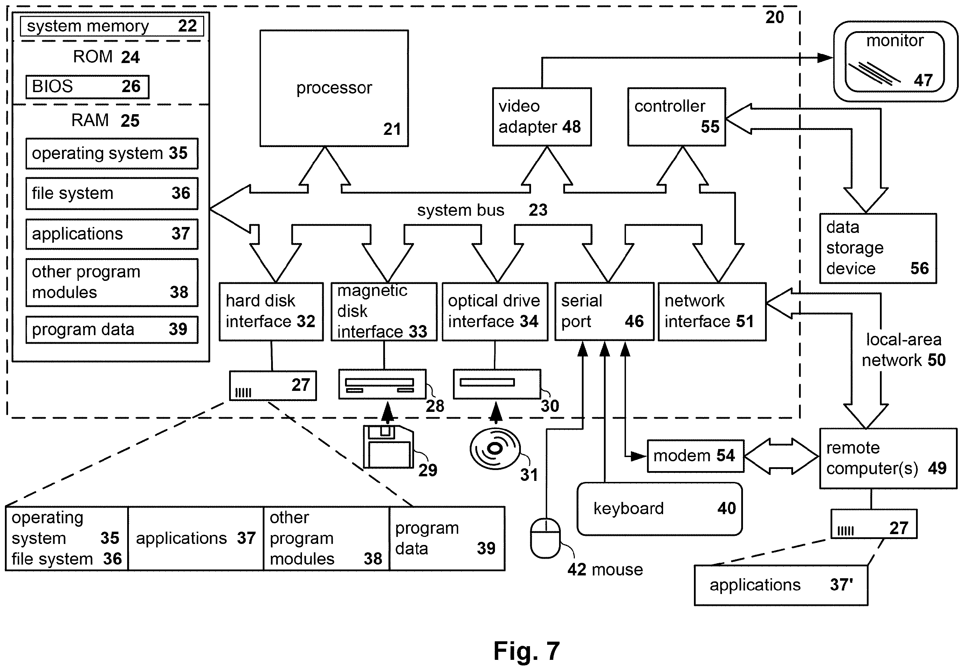

**Fig. 7** is a diagram illustrating a general-purpose computer system **20** on which examples of systems and methods for scanning web pages may be implemented. It should be noted that the computer system **20** can correspond to the system **100**, for example, described earlier.

As shown, the computer system **20** (which may be a personal computer or a server) includes a central processing unit **21**, a system memory **22**, and a system bus **23** connecting the various system components, including the memory associated with the central processing unit **21**. As will be appreciated by those of ordinary skill in the art, the system bus **23** may comprise a bus memory or bus memory controller, a peripheral bus, and a local bus that is able to interact with any other bus architecture. The system memory may include permanent memory (ROM) 24 and random-access memory (RAM) **25**. The basic input/output system (BIOS) **26** may store the basic procedures for transfer of information between elements of the computer system **20**, such as those at the time of loading the operating system with the use of the ROM **24**.

The computer system **20**, may also comprise a hard disk **27** for reading and writing data, a magnetic disk drive **28** for reading and writing on removable magnetic disks 29, and an optical drive **30** for reading and writing removable optical disks **31**, such as CD-ROM, DVD-ROM and other optical media. The hard disk **27**, the magnetic disk drive **28**, and the optical drive **30** are connected to the system bus **23** across the hard disk interface **32**, the magnetic disk interface **33** and the optical drive interface **34**, respectively. The drives and the corresponding computer information media are power-independent modules for storage of computer instructions, data structures, program modules and other data of the computer system **20**.

In one example, a system uses a hard disk **27**, a removable magnetic disk **29** and a removable optical disk **31** connected to the system bus **23** via the controller **55**. It will be understood by those of ordinary skill in the art that any type of media **56** that is able to store data in a form readable by a computer (solid state drives, flash memory cards, digital disks, random-access memory (RAM) and so on) may also be utilized.

The computer system **20** has a file system **36**, in which the operating system **35**, may be stored, as well as additional program applications **37**, other program modules **38**, and program data **39**. A user of the computer system **20** may enter commands and information using keyboard 40, mouse 42, or any other input device known to those of ordinary skill in the art, such as, but not limited to, a microphone, joystick, game controller, scanner, *etc.* Such input devices typically plug into the computer system **20** through a serial port **46**, which in turn is connected to the system bus, but those of ordinary skill in the art will appreciate that input devices may be also be connected in other ways, such as, without limitation, via a parallel port, a game port, or a universal serial bus (USB). A monitor 4**7** or other type of display device may also be connected to the system bus **23** across an interface, such as a video adapter **48**. In addition to the monitor **47**, the personal computer may be equipped with other peripheral output devices (not shown), such as loudspeakers, a printer, *etc.*

Computer system **20** may operate in a network environment, using a network connection to one or more remote computers **49**. The remote computer (or computers) **49** may be local computer workstations or servers comprising most or all of the aforementioned elements in describing the nature of a computer system **20**. Other devices may also be present in the computer network, such as, but not limited to, routers, network stations, peer devices or other network nodes.

Network connections can form a local-area computer network (LAN) **50** and a wide-area computer network (WAN). Such networks are used in corporate computer networks and internal company networks, and they generally have access to the Internet. In LAN or WAN networks, the personal computer **20** is connected to the local-area network **50** across a network adapter or network interface **51**. When networks are used, the computer system **20** may employ a modem **54** or other modules well known to those of ordinary skill in the art that enable communications with a wide-area computer network such as the Internet. The modem **54**, which may be an internal or external device, may be connected to the system bus **23** by a serial port **46**. It will be appreciated by those of ordinary skill in the art that said network connections are nonlimiting examples of numerous well-understood ways of establishing a connection by one computer to another using communication modules.

In various examples, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

In various examples, the systems and methods described in the present disclosure can be addressed in terms of modules. The term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and other functions facilitated by a combination of hardware and software. In certain implementations, at least a portion, and in some cases, all, of a module may be executed on the processor of a general purpose computer (such as the one described in greater detail in Figure 7, above). Accordingly, each module may be realized in a variety of suitable configurations, and should not be limited to any particular implementation exemplified herein.

## Claims

1. A method for limiting user access to suspicious objects of a social network service (120),
wherein the method comprises:
retrieving (301) a social graph (105) for a first user profile in a social network service (120), wherein the social graph comprises a plurality of objects to which the first user profile is linked;
identifying (302) one or more clusters of objects in the social graph;
determining (303), for each identified cluster, a first object that is linked to at least a threshold number of peer objects in the respective cluster;
responsive to determining (304) that the first object is forbidden according to a database of forbidden objects (106), determining (305) that the peer objects of the respective cluster are suspicious based on social links between the first object and the peer objects and on a further basis of a determination that the peer objects belong to a cluster in which the majority of the objects of that cluster are linked to forbidden objects; and
limiting (306) access of the first user profile to the first object and the peer objects determined to be suspicious in the social network service.

2. The method according to claim 1, further comprising:
determining that all objects in a respective cluster are suspicious based on a determination that an intra-cluster threshold has been reached of peer objects in the respective cluster having been determined to be suspicious.

3. The method according to any of claims 1 to 2, further comprising:
selecting (501) a known object in the social network service from the database of forbidden objects (106);
selecting (502) objects that are linked to the selected known object using the social graph (150); and
adding, to the database of forbidden objects, unknown objects that are absent from the database of forbidden objects and that are linked to the selected known object.

4. The method according to claim 3, wherein adding unknown objects to the database of forbidden objects further comprises:
determining (504) a measure of similarity of each unknown object with the known object based on common user profiles having social link to the known object and to the respective unknown object; and
adding (505) the unknown objects responsive to determining that the respective measures of similarity of the unknown objects with the known object exceeds a similarity threshold.

5. The method according to any of claims 1 to 4, wherein determining the first object further comprises:
selecting the first object based on a determination that the cluster in which the first object is contained has less than a container threshold number of objects.

6. The method according to any of claims 1 to 5, wherein the plurality of objects comprises user profiles, groups of user profiles, and content elements, and wherein the social graph comprises a plurality of social links between the plurality of objects and the first user profile.

7. A system for limiting user access to suspicious objects of a social network service, wherein the system comprises:
a storage device containing a database of forbidden objects (106); and
a processor configured to:
retrieve a social graph (105) for a first user profile in a social network service (120), wherein the social graph comprises a plurality of objects to which the first user profile is linked;
identify one or more clusters of objects in the social graph;
determine, for each identified cluster, a first object that is linked to at least a threshold number of peer objects in the respective cluster;
responsive to determining that the first object is forbidden according to the database of forbidden objects, determine that the peer objects of the respective cluster are suspicious based on social links between the first object and the peer objects and on a further basis of a determination that the peer objects belong to a cluster in which the majority of the objects of that cluster are linked to forbidden objects; and
limit access of the first user profile to the first object and the peer objects determined to be suspicious in the social network service.

8. The system according to claim 7, wherein the processor is further configured to:
determine that all objects in a respective cluster are suspicious based on a determination that an intra-cluster threshold has been reached of peer objects in the respective cluster having been determined to be suspicious.

9. The system according to any of claims 7 to 8, wherein the processor is further configured to:
select a known object in the social network service from the database of forbidden objects;
select objects that are linked to the selected known object using the social graph; and
add, to the database of forbidden objects, unknown objects that are absent from the database of forbidden objects and that are linked to the selected known object.

10. The system according to claim 9, wherein the processor configured to add unknown objects to the database of forbidden objects is further configured to:
determine a measure of similarity of each unknown object with the known object based on common user profiles having a social link to the known object and to the respective unknown object; and
add the unknown objects responsive to determining that the respective measures of similarity of the unknown objects with the known object exceeds a similarity threshold.

11. The system according to any of claims 7 to 10, wherein the processor configured to determine the first object is further configured to:
select the first object based on a determination that the cluster in which the first object is contained has less than a container threshold number of objects.

12. The system according to any of claims 7 to 11, wherein the plurality of objects comprises user profiles, groups of user profiles, and content elements, and wherein the social graph comprises a plurality of social links between the plurality of objects and the first user profile.

## Patentansprüche

1. Verfahren zum Beschränken eines Benutzerzugriffs auf verdächtige Objekte eines Dienstes eines sozialen Netzwerks (120),
wobei das Verfahren umfasst:
Abrufen (301) eines sozialen Graphen (105) für ein erstes Benutzerprofil in einem Dienst eines sozialen Netzwerks (120), wobei der soziale Graph eine Mehrzahl von Objekten umfasst, mit denen das erste Benutzerprofil verknüpft ist;
Identifizieren (302) eines oder mehrerer Cluster von Objekten in dem sozialen Graphen;
Bestimmen (303), für jeden identifizierten Cluster, eines ersten Objekts, das mit zumindest einer Schwellenanzahl von Peer-Objekten in dem jeweiligen Cluster verknüpft ist;
als Reaktion auf das Bestimmen (304), dass das erste Objekt gemäß einer Datenbank verbotener Objekte (106) verboten ist, Bestimmen (305), dass die Peer-Objekte des jeweiligen Clusters verdächtig sind, und zwar basierend auf sozialen Verknüpfungen zwischen dem ersten Objekt und den Peer-Objekten und auf einer weiteren Basis einer Bestimmung, dass die Peer-Objekte zu einem Cluster gehören, in dem die Mehrheit der Objekte dieses Clusters mit verbotenen Objekten verknüpft ist; und
Beschränken (306) des Zugriffs des ersten Benutzerprofils auf das erste Objekt und die Peer-Objekte, die in dem Dienst des sozialen Netzwerks als verdächtig bestimmt wurden.

2. Verfahren nach Anspruch 1, ferner umfassend:
Bestimmen, dass alle Objekte in einem jeweiligen Cluster verdächtig sind, basierend auf einer Bestimmung, dass ein clusterinterner Schwellenwert für Peer-Objekte in dem jeweiligen Cluster erreicht wurde, die als verdächtig bestimmt wurden.

3. Verfahren nach einem der Ansprüche 1 bis 2, ferner umfassend:
Auswählen (501) eines bekannten Objekts in dem Dienst des sozialen Netzwerks aus der Datenbank verbotener Objekte (106);
Auswählen (502) von Objekten, die mit dem ausgewählten bekannten Objekt verknüpft sind, unter Verwendung des sozialen Graphen (150); und
Hinzufügen, zu der Datenbank verbotener Objekte, von unbekannten Objekten, die in der Datenbank verbotener Objekte fehlen und die mit dem ausgewählten bekannten Objekt verknüpft sind.

4. Verfahren nach Anspruch 3, wobei das Hinzufügen unbekannter Objekte zu der Datenbank verbotener Objekte ferner umfasst:
Bestimmen (504) eines Maßes an Ähnlichkeit jedes unbekannten Objekts mit dem bekannten Objekt basierend auf gemeinsamen Benutzerprofilen, die eine soziale Verknüpfung zu dem bekannten Objekt und zu dem jeweiligen unbekannten Objekt aufweisen; und
Hinzufügen (505) der unbekannten Objekte als Reaktion auf das Bestimmen, dass die jeweiligen Maße an Ähnlichkeit der unbekannten Objekte mit dem bekannten Objekt einen Ähnlichkeitsschwellenwert überschreiten.

5. Verfahren nach einem der Ansprüche 1 bis 4, wobei das Bestimmen des ersten Objekts ferner umfasst:
Auswählen des ersten Objekts basierend auf einer Bestimmung, dass der Cluster, in dem das erste Objekt enthalten ist, weniger als einen Containerschwellenwert für Objekte aufweist.

6. Verfahren nach einem der Ansprüche 1 bis 5, wobei die Mehrzahl von Objekten Benutzerprofile, Gruppen von Benutzerprofilen und Inhaltselemente umfasst, und wobei der soziale Graph eine Mehrzahl sozialer Verknüpfrungen zwischen der Mehrzahl von Objekten und dem ersten Benutzerprofil umfasst.

7. System zum Beschränken eines Benutzerzugriffs auf verdächtige Objekte eines Dienstes eines sozialen Netzwerks, wobei das System umfasst:
eine Speichervorrichtung, die eine Datenbank verbotener Objekte (106) enthält; und
einen Prozessor, der konfiguriert ist zum:
Abrufen eines sozialen Graphen (105) für ein erstes Benutzerprofil in einem Dienst eines sozialen Netzwerks (120), wobei der soziale Graph eine Mehrzahl von Objekten umfasst, mit denen das erste Benutzerprofil verknüpft ist;
Identifizieren eines oder mehrerer Cluster von Objekten in dem sozialen Graphen;
Bestimmen, für jeden identifizierten Cluster, eines ersten Objekts, das mit zumindest einer Schwellenanzahl von Peer-Objekten in dem jeweiligen Cluster verknüpft ist;
als Reaktion auf das Bestimmen, dass das erste Objekt gemäß einer Datenbank verbotener Objekte verboten ist, Bestimmen, dass die Peer-Objekte des jeweiligen Clusters verdächtig sind, und zwar basierend auf sozialen Verknüpfungen zwischen dem ersten Objekt und den Peer-Objekten und auf einer weiteren Basis einer Bestimmung, dass die Peer-Objekte zu einem Cluster gehören, in dem die Mehrheit der Objekte dieses Clusters mit verbotenen Objekten verknüpft ist; und
Beschränken des Zugriffs des ersten Benutzerprofils auf das erste Objekt und die Peer-Objekte, die in dem Dienst des sozialen Netzwerks als verdächtig bestimmt wurden.

8. System nach Anspruch 7, wobei der Prozessor ferner konfiguriert ist zum:
Bestimmen, dass alle Objekte in einem jeweiligen Cluster verdächtig sind, basierend auf einer Bestimmung, dass ein clusterinterner Schwellenwert für Peer-Objekte in dem jeweiligen Cluster erreicht wurde, die als verdächtig bestimmt wurden.

9. System nach einem der Ansprüche 7 bis 8, wobei der Prozessor ferner konfiguriert ist zum:
Auswählen eines bekannten Objekts in dem Dienst des sozialen Netzwerks aus der Datenbank verbotener Objekte;
Auswählen von Objekten, die mit dem ausgewählten bekannten Objekt verknüpft sind, unter Verwendung des sozialen Graphen; und
Hinzufügen, zu der Datenbank verbotener Objekte, von unbekannten Objekten, die in der Datenbank verbotener Objekte fehlen und die mit dem ausgewählten bekannten Objekt verknüpft sind.

10. System nach Anspruch 9, wobei der Prozessor, der konfiguriert ist, unbekannte Objekte zu der Datenbank verbotener Objekte hinzuzufügen, ferner konfiguriert ist zum:
Bestimmen eines Maßes an Ähnlichkeit jedes unbekannten Objekts mit dem bekannten Objekt basierend auf gemeinsamen Benutzerprofilen, die eine soziale Verknüpfung zu dem bekannten Objekt und zu dem jeweiligen unbekannten Objekt aufweisen; und
Hinzufügen der unbekannten Objekte als Reaktion auf das Bestimmen, dass die jeweiligen Maße an Ähnlichkeit der unbekannten Objekte mit dem bekannten Objekt einen Ähnlichkeitsschwellenwert überschreiten.

11. System nach einem der Ansprüche 7 bis 10, wobei der Prozessor, der konfiguriert ist, das erste Objekt zu bestimmen, ferner konfiguriert ist zum:
Auswählen des ersten Objekts basierend auf einer Bestimmung, dass der Cluster, in dem das erste Objekt enthalten ist, weniger als einen Containerschwellenwert für Objekte aufweist.

12. System nach einem der Ansprüche 7 bis 11, wobei die Mehrzahl von Objekten Benutzerprofile, Gruppen von Benutzerprofilen und Inhaltselemente umfasst, und wobei der soziale Graph eine Mehrzahl sozialer Verknüpfrungen zwischen der Mehrzahl von Objekten und dem ersten Benutzerprofil umfasst.

## Revendications

1. Procédé de limitation de l'accès utilisateur à des objets suspects d'un service de réseau social (120),
dans lequel le procédé comprend :
la récupération (301) d'un graphe social (105) pour un premier profil d'utilisateur dans un service de réseau social (120), dans lequel le graphe social comprend une pluralité d'objets auxquels le premier profil d'utilisateur est lié ;
l'identification (302) d'un ou plusieurs groupes d'objets dans le graphe social ;
la détermination (303), pour chaque groupe identifié, d'un premier objet qui est lié à au moins un nombre seuil d'objets homologues dans le groupe respectif ;
en réponse à la détermination (304) que le premier objet est interdit selon une base de données d'objets interdits (106), la détermination (305) que les objets homologues du groupe respectif sont suspects sur la base de liens sociaux entre le premier objet et les objets homologues et sur une base supplémentaire d'une détermination que les objets homologues appartiennent à un groupe dans lequel la majorité des objets de ce groupe sont liés à des objets interdits ; et
la limitation (306) de l'accès du premier profil d'utilisateur au premier objet et aux objets homologues déterminés comme étant suspects dans le service de réseau social.

2. Procédé selon la revendication 1, comprenant en outre :
la détermination que tous les objets dans un groupe respectif sont suspects sur la base d'une détermination qu'un seuil intra-groupe a été atteint d'objets homologues dans le groupe respectif ayant été déterminés comme étant suspects.

3. Procédé selon l'une quelconque des revendications 1 à 2, comprenant en outre :
la sélection (501) d'un objet connu dans le service de réseau social à partir de la base de données d'objets interdits (106) ;
la sélection (502) d'objets qui sont liés à l'objet connu sélectionné en utilisant le graphe social (150) ; et
l'ajout, à la base de données d'objets interdits, d'objets inconnus qui sont absents de la base de données d'objets interdits et qui sont liés à l'objet connu sélectionné.

4. Procédé selon la revendication 3, dans lequel l'ajout d'objets inconnus à la base de données d'objets interdits comprend en outre :
la détermination (504) d'une mesure de similarité de chaque objet inconnu avec l'objet connu sur la base de profils d'utilisateurs communs ayant un lien social à l'objet connu et à l'objet inconnu respectif ; et
l'ajout (505) des objets inconnus en réponse à la détermination que les mesures respectives de similarité des objets inconnus avec l'objet connu dépassent un seuil de similarité.

5. Procédé selon l'une quelconque des revendications 1 à 4, dans lequel la détermination du premier objet comprend en outre :
la sélection du premier objet sur la base d'une détermination que le groupe dans lequel le premier objet est contenu comporte moins d'un nombre seuil d'objets d'un conteneur.

6. Procédé selon l'une quelconque des revendications 1 à 5, dans lequel la pluralité d'objets comprend des profils d'utilisateurs, des groupes de profils d'utilisateurs, et des éléments de contenu, et dans lequel le graphe social comprend une pluralité de liens sociaux entre la pluralité d'objets et le premier profil d'utilisateur.

7. Système de limitation de l'accès utilisateur à des objets suspects d'un service de réseau social, dans lequel le système comprend :
un dispositif de stockage contenant une base de données d'objets interdits (106) ; et un processeur configuré pour :
récupérer un graphe social (105) pour un premier profil d'utilisateur dans un service de réseau social (120), dans lequel le graphe social comprend une pluralité d'objets auxquels le premier profil d'utilisateur est lié ;
identifier un ou plusieurs groupes d'objets dans le graphe social ;
déterminer, pour chaque groupe identifié, un premier objet qui est lié à au moins un nombre seuil d'objets homologues dans le groupe respectif ;
en réponse à la détermination que le premier objet est interdit selon la base de données d'objets interdits, déterminer que les objets homologues du groupe respectif sont suspects sur la base de liens sociaux entre le premier objet et les objets homologues et sur une base supplémentaire d'une détermination que les objets homologues appartiennent à un groupe dans lequel la majorité des objets de ce groupe sont liés à des objets interdits ; et
limiter l'accès du premier profil d'utilisateur au premier objet et aux objets homologues déterminés comme étant suspects dans le service de réseau social.

8. Système selon la revendication 7, dans lequel le processeur est en outre configuré pour :
déterminer que tous les objets dans un groupe respectif sont suspects sur la base d'une détermination qu'un seuil intra-groupe a été atteint d'objets homologues dans le groupe respectif ayant été déterminés comme étant suspects.

9. Système selon l'une quelconque des revendications 7 à 8, dans lequel le processeur est en outre configuré pour :
sélectionner un objet connu dans le service de réseau social à partir de la base de données d'objets interdits ;
sélectionner des objets qui sont liés à l'objet connu sélectionné en utilisant le graphe social ; et
ajouter, à la base de données d'objets interdits, des objets inconnus qui sont absents de la base de données d'objets interdits et qui sont liés à l'objet connu sélectionné.

10. Système selon la revendication 9, dans lequel le processeur configuré pour ajouter des objets inconnus à la base de données d'objets interdits est en outre configuré pour :
déterminer une mesure de similarité de chaque objet inconnu avec l'objet connu sur la base de profils d'utilisateurs communs ayant un lien social à l'objet connu et à l'objet inconnu respectif ; et
ajouter les objets inconnus en réponse à la détermination que les mesures respectives de similarité des objets inconnus avec l'objet connu dépassent un seuil de similarité.

11. Système selon l'une quelconque des revendications 7 à 10, dans lequel le processeur configuré pour déterminer le premier objet est en outre configuré pour :
sélectionner le premier objet sur la base d'une détermination que le groupe dans lequel le premier objet est contenu comporte moins d'un nombre seuil d'objets d'un conteneur.

12. Système selon l'une quelconque des revendications 7 à 11, dans lequel la pluralité d'objets comprend des profils d'utilisateurs, des groupes de profils d'utilisateurs, et des éléments de contenu, et dans lequel le graphe social comprend une pluralité de liens sociaux entre la pluralité d'objets et le premier profil d'utilisateur.
